# EUROPEAN PATENT APPLICATION

(11) **EP 1 514 629 A1**
(43) Date of publication of application: **16.03.2005**
(21) Application number: 03730874.9
(22) Date of filing: 10.06.2003
(51) Int. Cl.: B23K 11/06

(54) **SEAM WELDING APPARATUS**

(30) Priority: 11.06.2002 JP 2002170078; 11.06.2002 JP 2002170108
(71) Applicant: Honda Giken Kogyo Kabushiki Kaisha, Minato-ku, Tokyo 107-8556 (JP)
(72) Inventor: YAMAOKA, Naoji, Sayama-shi, Saitama 350-1381 (JP); RYU, Hidekazu, Sayama-shi, Saitama 350-1381 (JP); YAGI, Hiroyuki, Sayama-shi, Saitama 350-1381 (JP); SHIMADA, Takashi, Sayama-shi, Saitama 350-1381 (JP); OHASHI, Masahiro, Sayama-shi, Saitama350-1381 (JP); ARAKI, Takayuki, Sayama-shi, Saitama350-1381 (JP); MAESHIMA, Seiichi, Sayama-shi, Saitama350-1381 (JP)
(74) Representative: Jenkins, Peter David
(86) International application number: PCT/JP2003/007338
(87) International publication number: WO 2003/103884

(57) **Abstract**

A seam welding apparatus (1) comprises an upper electrode disk (16a) that is provided at a position offset from piston rods (pressing shafts) (56a,56b) of cylinders (54a,54b) that press toward the side of a lower electrode disk (16a), a bracket (42) that is displaced integrally with the upper electrode disk (16a) under biasing/de-biasing action of the cylinders (54a,54b), an offset pressing mechanism (22) including a guide mechanism (44) that guides the bracket (42) along the vertical direction, and rotation mechanism (26,26a) for rotating he upper and lower electrode disks (16a,16b) by a predetermined angle along the horizontal direction in accordance with the shape of a welding line (A) of an outer peripheral end portion (78) of a work piece (20).

## Description

### TECHNICAL FIELD

The present invention relates to a seam welding apparatus for smoothly seam-welding a workpiece along a welding line comprising a two-dimensional or three-dimensional curve formed on a container such as a fuel tank for use on a motor vehicle or the like.

### BACKGROUND ART

Fuel tanks for use on motor vehicles or the like, for example, have heretofore been manufactured by superposing outer peripheral ends of two members that have been pressed to shape thereby to assemble a hollow container, and seam-welding the superposed outer peripheral ends with a pair of electrode rolls.

Specifically, the two pressed members (hereinafter referred to as a workpiece) whose outer peripheral ends are superposed are held by an arm of a multiple-joint robot, and the workpiece is displaced by the arm to cause the outer peripheral ends to pass between a pair of electrode rolls of a fixed seam welding apparatus, thereby integrally joining the superposed outer peripheral ends.

Stated otherwise, according to the conventional art, it has been general practice to combine an ordinary stationary seam welding apparatus with a workpiece feeding apparatus in the form of a multiple-joint robot, and to move the workpiece while the seam welding apparatus is being fixed in position (see, for example, Japanese laid-open patent publication No. 6-47557 and Japanese laid-open patent publication No. 7-241684).

Fuel tanks for use on motor vehicles are changing to much more complex shapes than heretofore due to improved appearance designs and functionality. According to the conventional art disclosed in Japanese laid-open patent publication No. 6-47557 and Japanese laid-open patent publication No. 7-241684, because of the change in the shape of fuel tanks for use on motor vehicles, the arm of the multiple-joint robot for holding the fuel tank is required to move according to a complex pattern in a wide range. Depending on the shape of fuel tanks for use on motorcycles, for example, the robot arm may interfere with the stationary seam welding apparatus, making it difficult for the stationary seam welding apparatus to perform a seam welding process.

The present applicant has proposed a control process for use in an automatic seam welding apparatus to automatically detect when the actual distance that a workpiece is fed by electrode rolls is not in agreement with the distance that the workpiece is fed by the movement of the multiple-joint robot, and to correct the trajectory of the workpiece (see Japanese patent publication No. 3-68791).

Specifically, Japanese patent publication No. 3-68791 discloses a technical idea for detecting the difference between an actual torque acting on a vertical wrist shaft which holds the workpiece with a workpiece holder and a normal torque acting on the wrist shaft when the actual distance that the workpiece is fed by the electrode rolls is in agreement with the distance that the workpiece is fed by the movement of the multiple-joint robot, and changing the rotational speed of the electrode rolls and the direction of travel of the electrode rolls with respect to the workpiece based on the difference.

It is an object of the present invention to provide a seam welding apparatus which is capable of performing a stable seam welding process without interfering with an arm of a robot which holds a workpiece even if the workpiece is more complex in shape than heretofore due to improved appearance designs and functionality.

Another object of the present invention is to provide a seam welding apparatus which is capable of smoothly seam-welding workpieces along various welding lines thereon which are more complex than heretofore due to improved appearance designs and functionality.

### DISCLOSURE OF THE INVENTION

According to the present invention, a seam welding apparatus comprises an offset pressure-applying mechanism including a pressing mechanism for pressing an upper electrode roll toward a lower electrode roll. The pressing mechanism includes a pressing shaft from which the upper electrode roll is offset. When the pressing mechanism is activated and inactivated, the upper electrode roll and a displacement mechanism can be displaced in unison with each other along a guide mechanism.

With the present invention, therefore, even if the workpiece has a more complex shape than heretofore due to improved appearance designs and functionality, the seam welding apparatus can seam-weld the workpiece stably without interfering with an arm of a robot which holds the workpiece.

According to the present invention, furthermore, a seam welding apparatus comprises a turning mechanism for horizontally turning a pair of electrode rolls by a predetermined angle according to a shape of a welding line on an outer peripheral end of a workpiece, about a sandwiched region where the workpiece is sandwiched by the pair of electrode rolls. Consequently, even if the shape of the welding line on the workpiece is more complex than heretofore due to improved appearance designs and functionality, the seam welding apparatus can seam-weld the workpiece smoothly.

### BRIEF DESCRIPTION OF THE DRAWINGS

FIG. 1 is a front elevational view of a seam welding apparatus according to an embodiment of the present invention;
FIG. 2 is an enlarged front elevational view, partly omitted from illustration, of an offset pressure-applying mechanism of the seam welding apparatus shown in FIG. 1;
FIG. 3 is a plan view, partly omitted from illustration, of the offset pressure-applying mechanism shown in FIG. 2;
FIG. 4 is a side elevational view, partly omitted from illustration, of the offset pressure-applying mechanism shown in FIG. 2;
FIG. 5 is an enlarged front elevational view, partly omitted from illustration, of a turning mechanism of the seam welding apparatus shown in FIG. 1;
FIG. 6 is a plan view of the turning mechanism shown in FIG. 5;
FIG. 7 is a view showing a support table of the turning mechanism shown in FIG. 5, as it is turned a predetermined angle;
FIG. 8 is a perspective view of a fuel tank, as a workpiece, for use on a motorcycle;
FIG. 9 is a view showing the manner in which an outer peripheral end of a workpiece is seam-welded by an upper electrode disk and a lower electrode disk;
FIG. 10 is a front elevational view, partly cut away, showing the manner in which the outer peripheral end of the workpiece is seam-welded; and
FIG. 11 is a front elevational view of a seam welding apparatus according to another embodiment of the present invention.

### BEST MODE FOR CARRYING OUT THE INVENTION

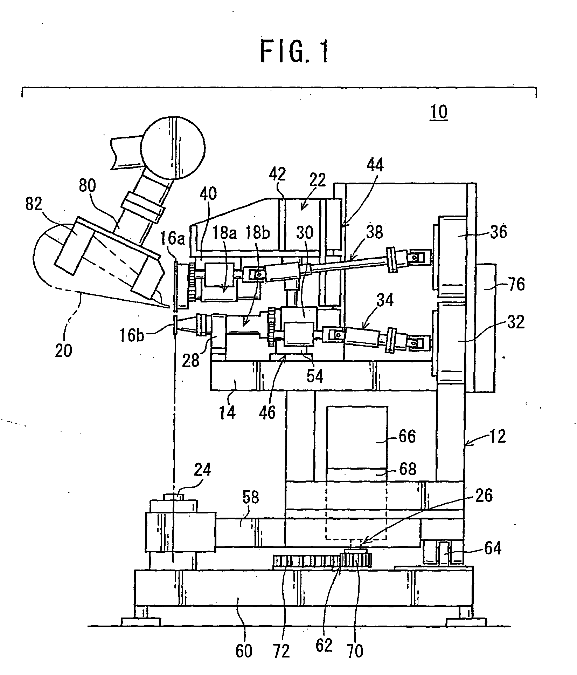

FIG. 1 shows a seam welding apparatus according to an embodiment of the present invention, designated by the reference numeral 10.

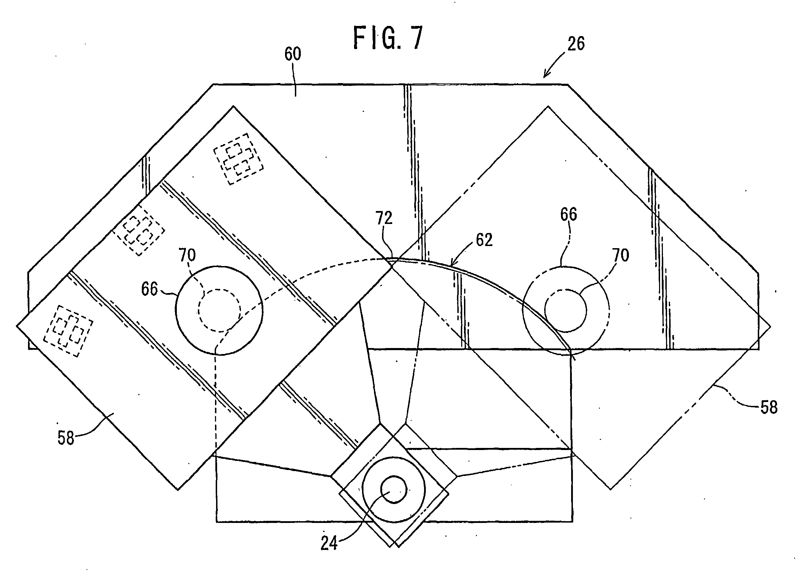

The seam welding apparatus 10 comprises a main body 12 constructed of a plurality of frames; upper and lower electrode mechanisms 18a, 18b mounted above a table 14 of the main body 12 and having an upper electrode disk (upper electrode roll) 16a and a lower electrode disk (lower electrode roll) 16b, respectively; an offset pressure-applying mechanism 22 or offset pressing mechanism for applying pressure to a weld point of a workpiece 20 that is sandwiched between the upper electrode disk 16a and the lower electrode disk 16b, the offset pressure-applying mechanism 22 being capable of adjusting the pressure; and a turning mechanism 26 or rotation mechanism (see FIG. 7) for horizontally turning the apparatus in its entirety which includes the upper and lower electrode mechanisms 18a, 18b, the offset pressure-applying mechanism 22, and the main body 12 in an angular range of about 90 degrees about a support post 24.

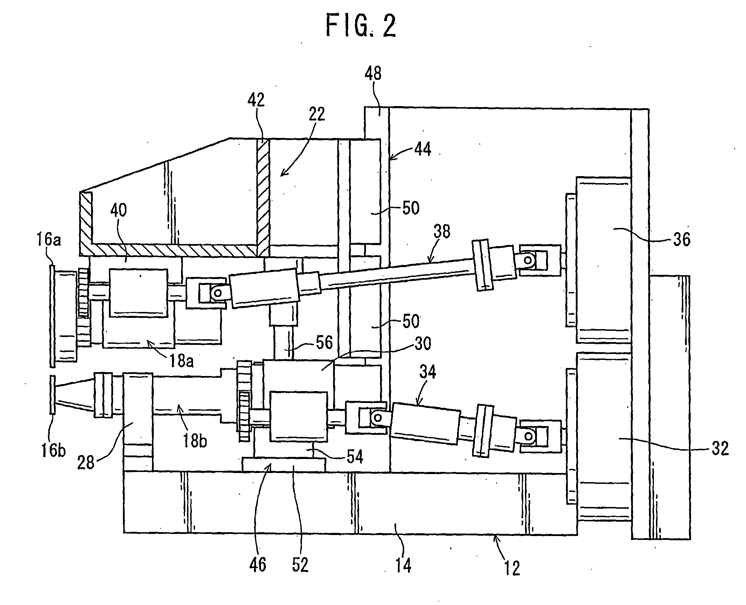

As shown in FIG. 2, the lower electrode mechanism 18b comprises a pair of bearings 28, 30 fixedly mounted on the table 14 and spaced a predetermined distance from each other, the bearings 28, 30 rotatably supporting the lower electrode disk 16b; a lower electrode drive motor 32 for rotating the lower electrode disk 16b in a predetermined direction; and a first universal joint 34 for transmitting rotational drive forces from the lower electrode drive motor 32 to the lower electrode disk 16b.

The upper electrode mechanism 18a comprises an upper electrode drive motor 36 for rotating the upper electrode disk 16a in a predetermined direction; and a second universal joint 38 for transmitting rotational drive forces from the upper electrode drive motor 36 to the upper electrode disk 16a.

The upper electrode disk 16a has a diameter greater than that of the lower electrode disk 16b. Each of the lower electrode drive motor 32 and the upper electrode drive motor 36 may comprise a servomotor.

As shown in FIG. 2, the offset pressure-applying mechanism 22 comprises a bracket (displacement mechanism) 42 supporting the upper electrode disk 16a through a spacer 40 and vertically displaceable along a vertical plane which lies substantially perpendicularly to the upper surface of the table 14; a guide mechanism 44 for vertically guiding the upper electrode disk 16a supported by the bracket 42; and a pressing mechanism 46 for pressing the upper electrode disk 16a toward the lower electrode disk 16b.

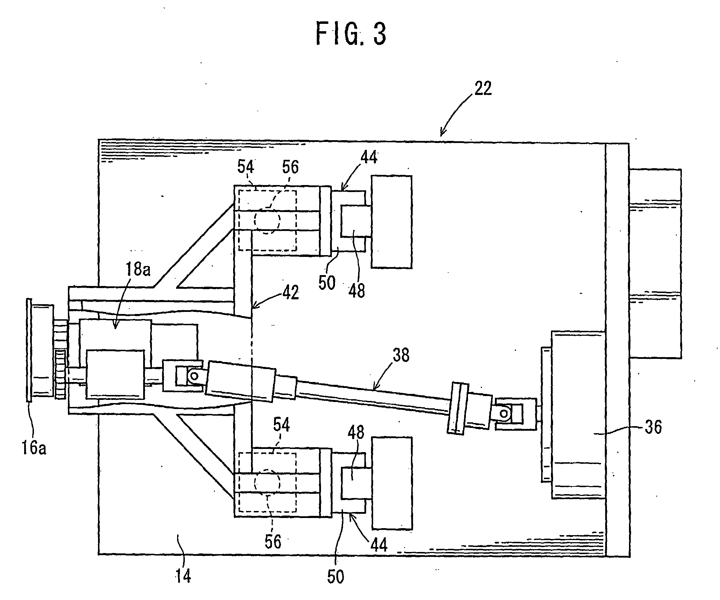

The guide mechanism 44 comprises a pair of guide rails 48 provided on the vertical surfaces of the main body 12 and vertically extending parallel to each other; and a pair of guide blocks 50 coupled to the bracket 42 for sliding movement along the respective guide rails 48 (see also FIG. 3). The bracket 42 is vertically displaceable while being guided by the guide blocks 50 that slide along the respective guide rails 48.

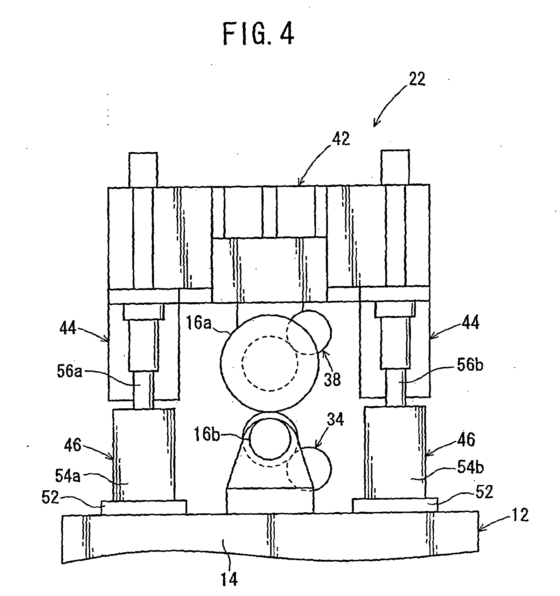

As shown in FIG. 4, the pressing mechanism 46 has a pressing actuator comprising a pair of cylinders 54a, 54b fixed to the table 14 by respective fixing plates 52. The cylinders 54a, 54b have respective cylinder tubes from which there project respective piston rods (pressing shafts) 56a, 56b having ends connected to the bracket 42. The upper electrode disk 16a is located in a position offset from the piston rods 56a, 56b of the cylinders 54a, 54b which function as the pressing shafts of the pressing mechanism 46 for pressing the upper electrode disk 16a toward the lower electrode disk 16b (see FIG. 4).

When a fluid under pressure, e.g., air under pressure, is supplied to the cylinders 54a, 54b, the cylinders 54a, 54b are actuated to vertically displace the piston rods 56a, 56b to lift or lower the bracket 42. As a result, a desired pressing force is applied to the workpiece 20 that is sandwiched between the upper electrode disk 16a which is displaced in unison with the bracket 42 and the lower electrode disk 16b fixed to the table 14.

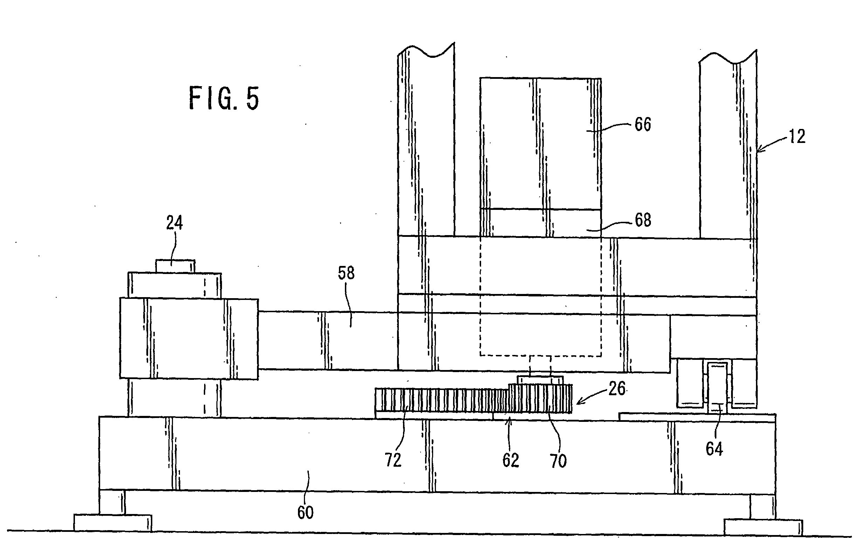

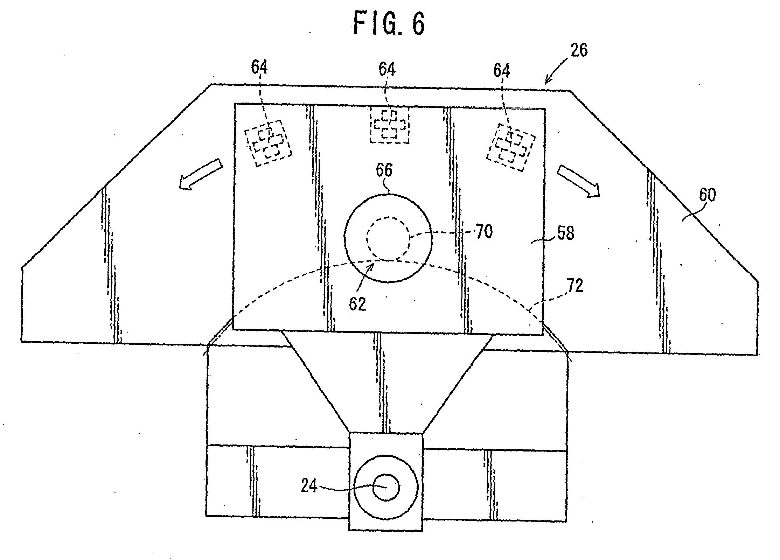

As shown in FIGS. 5 and 6, the turning mechanism 26 comprises a support plate 58 supporting the main body 12 thereon; the support post 24 rotatably supporting the support plate 58; a base 60 spaced downwardly from the support plate 58 and supporting the support post 24; a turning assembly 62 for turning the support plate 58 horizontally by a predetermined angle about the axis of the support post 24; and a plurality of rollers 64 rotatably mounted on the bottom of the support plate 58 for rolling movement on the base 60 when the support plate 58 is turned by the turning assembly 62.

The turning assembly 62 comprises a turning motor (e.g., a servomotor) 66 fixedly mounted on the support plate 58; a speed reducer 68 combined with the turning motor 66; a pinion 70 coupled to the motor shaft of the turning motor 66; and an arcuate rack 72 fixed to the base 60 and held in mesh with the pinion 70.

When the turning motor 66 is energized by a power supply (not shown) electrically connected thereto, the pinion 70 of the turning mechanism 26 is rotated in a certain direction about the axis thereof, causing the pinion 70 and the rack 72 held in mesh therewith to turn the support plate 58 about the support post 24 in an angular range of about 90 degrees along a horizontal plane (see FIG. 7). The upper electrode disk 16a and the lower electrode disk 16b which are mounted above the support plate 58 are thus angularly moved in unison with the support plate 58 in the angular range of about 90 degrees.

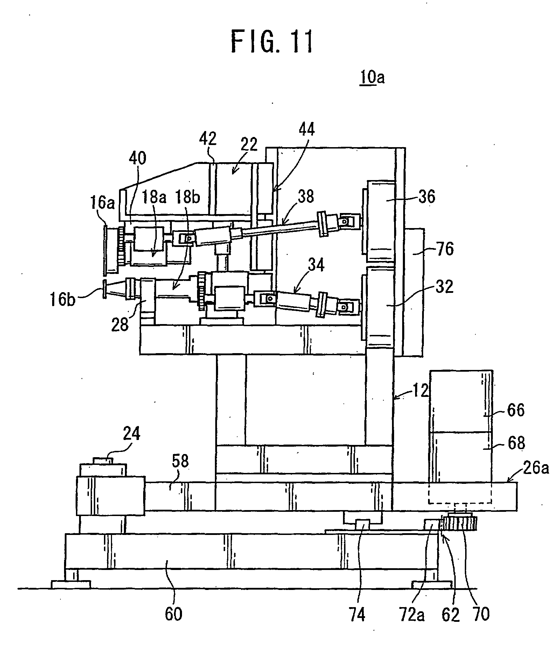

As shown in FIG. 11, a turning mechanism 26a, which is made up of the turning motor 66, the turning assembly 62, etc., may be disposed on an edge of the support plate 58 remotely from the support post 24, with an arcuate guide rail 74 interposed between the support plate 58 and the base 60. The pinion 70 is held in mesh with an arcuate rack 72a mounted on the base 60.

The workpiece 20 that is sandwiched between the upper electrode disk 16a and the lower electrode disk 16b has its weld point (sandwiched region) vertically aligned with the axis of the support post 24 (see FIG. 1).

A welding transformer 76 is fixedly mounted on a side surface of the main body 12 which is close to the upper electrode drive motor 36 and the lower electrode drive motor 32.

The seam welding apparatus 10 according to the present embodiment is basically constructed as described above. Operation and advantages of the seam welding apparatus 10 will be described below.

First, the workpiece 20 to be welded by the seam welding apparatus 10 will be described below.

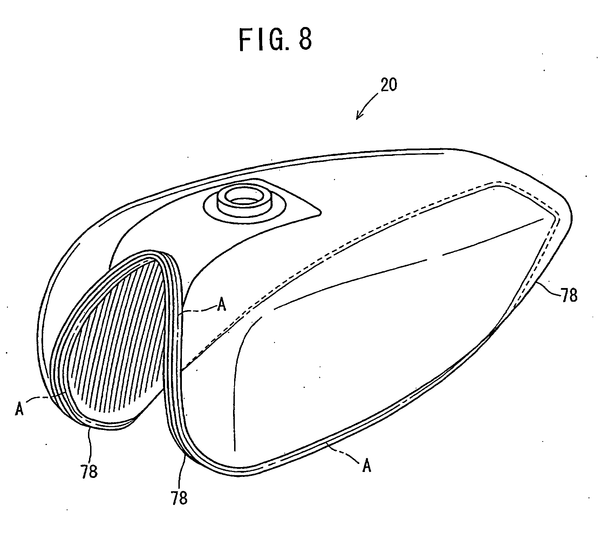

As shown in FIG. 8, the workpiece 20 is used as a fuel tank for use on a motorcycle, and comprises two pressed members having respective outer peripheral ends 78 superposed on each other. The outer peripheral ends 78 are welded to each other along a welding line A (see the dashed line in FIG. 8) represented by a two-dimensional or three-dimensional composite curve which is complex in shape.

Fuel tanks for use on various on-road and off-road motorcycles have various different shapes, and fuel tanks for use on various four-wheeled motor vehicles also have various different shapes. Therefore, fuel tanks having various different shapes are used on motor vehicles depending on their types, and welding lines A on those fuel tanks have various different shapes.

The shapes of fuel tanks undergo various changes due to improved appearance designs and functionality thereof, and the welding lines A on the fuel tanks change to much more complex shapes than heretofore on account of those changes in the shapes of the fuel tanks.

As shown in FIG. 1, the workpiece 20 is held by a workpiece holding jig 82 such as a bracket or the like on an arm 80 of a known multiple-joint robot which is displaceable about multiple axes including three X-, Y-, and Z-axes. The workpiece 20 can be displaced by operating the arm 80 about those axes.

The upper and lower electrode disks 16a, 16b are rotated respectively by the upper and lower electrode drive motors 36, 32 in synchronism with the operation of the arm 80 of the multiple-joint robot by a controller (not shown). The upper and lower electrode drive motors 36, 32 have their rotational speeds controlled by motor control signals that are output from the controller.

The controller is supplied in advance with desired numerical control information corresponding to the welding line A on the workpiece 20. The multiple-joint robot is controlled for its various modes of operation based on a robot control signal from the controller.

The turning motor 66 of the turning mechanism 26 is supplied with a control signal from the controller, and is controlled based on the supplied control signal. As described later, the upper electrode disk 16a and the lower electrode disk 16b can thus be controlled by the control signal from the controller.

After the workpiece 20 is held by the workpiece holding jig 82, the arm 80 of the multiple-joint robot operates to place the outer peripheral ends 78 of the workpiece 20 between the upper electrode disk 16a and the lower electrode disk 16b to be gripped therebetween.

Specifically, the upper electrode disk 16a and the lower electrode disk 16b are initially spaced a predetermined distance from each other by the offset pressure-applying mechanism 22. When the fluid under pressure is supplied to the cylinders 54a, 54b functioning as the pressing actuator to displace the piston rods 56a, 56b downwardly, the bracket 42 and the upper electrode disk 16a are lowered in unison with each other while being guided by the guide mechanism 44 (see FIG. 4). The outer peripheral ends 78 (at a welding start position) of the workpiece 20 are then sandwiched between the fixed lower electrode disk 16b and the upper electrode disk 16a. A predetermined pressing force is applied to the outer peripheral ends 78 when the upper electrode disk 16a is pressed against the outer peripheral ends 78 by the cylinders 54a, 54b.

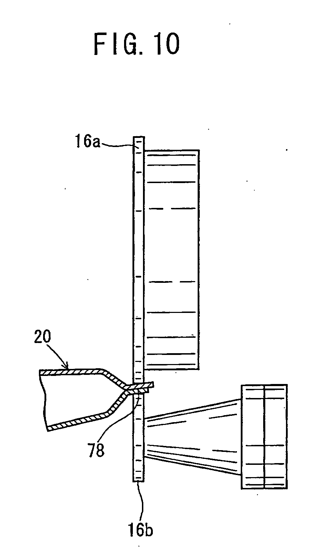

After the outer peripheral ends 78 of the workpiece 20 are gripped by the upper electrode disk 16a and the lower electrode disk 16b, the controller passes an electric current between the upper electrode disk 16a and the lower electrode disk 16b, and rotates the upper electrode disk 16a and the lower electrode disk 16b to seam-weld the outer peripheral ends 78 along the welding line A thereon (see FIG. 10).

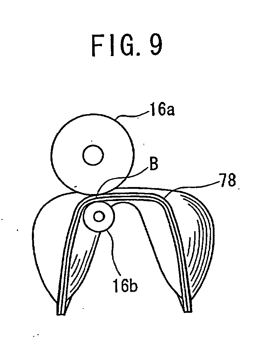

When a complex region B of the welding line, as shown in FIG. 9, is to be welded during the seam-welding process, the controller outputs a control signal to energize the turning motor 66 to rotate the pinion 70 held in mesh with the rack 72, thereby turning the support plate 58 about the support post 24 by a predetermined angle along a horizontal plane.

Therefore, the upper electrode disk 16a and the lower electrode disk 16b which are mounted above the support plate 58 are turned in unison with the support plate 58 about the support post 24 by the predetermined angle along the horizontal plane. Since the weld point (sandwiched region) of the workpiece 20 that is welded by the upper electrode disk 16a and the lower electrode disk 16b is vertically aligned with the axis of the support post 24 (see FIG. 1), respective circular planes of the upper electrode disk 16a and the lower electrode disk 16b are horizontally turned a predetermined angle while the weld point of the workpiece 20 is being kept constant.

Stated otherwise, the respective circular planes of the upper electrode disk 16a and the lower electrode disk 16b are turned in an angular range of about 90 degrees about the vertical line through the weld point of the workpiece 20 along the horizontal plane.

Even if the workpiece 20 has a more complex shape than heretofore due to improved appearance designs and functionality, therefore, the offset pressure-applying mechanism 22 for displacing the bracket 42 and the upper electrode disk 16a in unison with each other vertically along the guide rails 48 with the cylinders 54a, 54b functioning as the pressing actuator allows the workpiece 20 to be seam-welded stably without interfering with the arm 80 of the rotor which holds the workpiece 20.

According to the present embodiment, furthermore, even if the welding line of the workpiece 20 has a more complex shape, the offset pressure-applying mechanism 22 applies an appropriate pressure to the weld point of the workpiece 20 to perform a smooth seam-welding process on the workpiece 20.

According to the present embodiment, moreover, since the upper electrode disk 16a and the lower electrode disk 16b are turned by a predetermined angle along a horizontal plane while the weld point (sandwiched region) of the workpiece 20 is being kept unchanged or constant, the workpiece can smoothly be seam-welded even if the welding line on the workpiece has a more complex shape than heretofore due to improved appearance designs and functionality.

According to the present embodiment, furthermore, even though the welding line A (see FIG. 8) is represented by a two-dimensional or three-dimensional composite curve which is complex in shape, the upper electrode disk 16a and the lower electrode disk 16b have their orientations moved while keeping their weld point constant to prevent the arm 80 of the multiple-joint robot from interfering with the seam welding apparatus 10 and to increase the operating range of the arm 80.

According to the present embodiment, furthermore, the upper electrode disk 16a and the lower electrode disk 16b can be turned with a simple structure without involving an increase in the size and weight of the apparatus in its entirety.

According to the present embodiment, moreover, the workpiece 20 can have an increased finishing accuracy because vibrations of the multiple-joint robot during its operation do not affect the finishing of the welded surface of the workpiece 20.

### INDUSTRIAL APPLICABILITY

According to the present invention, the offset pressure-applying mechanism including the upper electrode roll disposed in a position offset from the pressing shafts allows the workpiece to be seam-welded stably without interfering with the arm of the robot which holds the workpiece even if the workpiece has a more complex shape than heretofore due to improved appearance designs and functionality. As a result, the arm of the robot which holds the workpiece has an increased operating range.

## Claims

1. A seam welding apparatus for welding a workpiece (20) held by an arm (80) of a robot with a pair of upper and lower electrode rolls (16a, 16b) which sandwich an outer peripheral end (78) of said workpiece (20), said apparatus comprising:
an offset pressure-applying mechanism (22) including a pressing mechanism (46) for pressing said upper electrode roll (16a) toward said lower electrode roll (16b), said pressing mechanism (46) having a pressing shaft from which said upper electrode roll (16a) is offset;
said offset pressure-applying mechanism (22) further including a displacement mechanism to be displaced in unison with said upper electrode roll (16a) when said pressing mechanism (46) is activated and inactivated, and a guide mechanism (44) for guiding said displacement mechanism.

2. A seam welding apparatus according to claim 1, wherein said displacement mechanism comprises a bracket (42) supporting said upper electrode roll (16a) and being displaceable vertically in unison with said upper electrode roll (16a).

3. A seam welding apparatus according to claim 1, wherein said guide mechanism (44) comprises parallel guide rails (48) coupled to a main body (12) and extending vertically, and guide blocks (50) slidable along said guide rails (48).

4. A seam welding apparatus according to claim 1, wherein said pressing mechanism (46) comprises a cylinder (54a, 54b) fixedly mounted on a table (14) of a main body (12), said cylinder (54a, 54b) including a piston rod (56a, 56b) functioning as said pressing shaft.

5. A seam welding apparatus according to claim 2, wherein said bracket (42) is connected to piston rods (56a, 56b) of a pair of cylinders (54a, 54b), said bracket (42) being vertically movable when said cylinders (54a, 54b) are actuated.

6. A seam welding apparatus for welding a workpiece (20) held by an arm (80) of a robot with a pair of electrode rolls (16a, 16b) which sandwich an outer peripheral end (78) of said workpiece (20), said apparatus comprising:
a turning mechanism (26, 26a) for horizontally turning said pair of electrode rolls (16a, 16b) by a predetermined angle according to a shape of a welding line (A) on said outer peripheral end (78) of said workpiece (20), about a sandwiched region where said workpiece (20) is sandwiched by said pair of electrode rolls (16a, 16b).

7. A seam welding apparatus according to claim 6, wherein said turning mechanism (26, 26a) comprises a support plate (58) supporting a main body (12) which includes said pair of electrode rolls (16a, 16b), a support post (24) rotatably supporting said support plate (58), and a turning assembly (62) for horizontally turning said main body (12) which includes said pair of electrode rolls (16a, 16b) in unison with said support plate (58) by a predetermined angle about said support post (24).

8. A seam welding apparatus according to claim 7, wherein said sandwiched region where said workpiece (20) is sandwiched by said pair of electrode rolls (16a, 16b) is vertically aligned with said support post (24) that supports said support plate (58).

9. A seam welding apparatus according to claim 7, wherein said turning assembly (62) comprises a rack (72) and a pinion (70), and a servomotor (66) including a drive shaft on which said pinion (70) is mounted.

10. A seam welding apparatus according to claim 7, wherein said turning mechanism (26a) is disposed on an edge of said support plate (58).

11. A seam welding apparatus for welding a workpiece (20) held by an arm (80) of a robot with a pair of upper and lower electrode rolls (16a, 16b) which sandwich an outer peripheral end (78) of said workpiece (20), said apparatus comprising:
an offset pressure-applying mechanism (22) including a pressing mechanism (46) for pressing said upper electrode roll (16a) toward said lower electrode roll (16b), said pressing mechanism (46) having a pressing shaft from which said upper electrode roll (16a) is offset; and
a turning mechanism (26, 26a) for horizontally turning said pair of upper and lower electrode rolls (16a, 16b) by a predetermined angle according to a shape of a welding line (A) on said outer peripheral end (78) of said workpiece (20), about a sandwiched region where said workpiece (20) is sandwiched by said pair of upper and lower electrode rolls (16a, 16b).

12. A seam welding apparatus according to claim 11, wherein said displacement mechanism comprises a bracket (42) supporting said upper electrode roll (16a) and being displaceable vertically in unison with said upper electrode roll (16a).

13. A seam welding apparatus according to claim 11, wherein said guide mechanism (44) comprises parallel guide rails (48) coupled to a main body (12) and extending vertically, and guide blocks (50) slidable along said guide rails (48).

14. A seam welding apparatus according to claim 11, wherein said pressing mechanism (46) comprises a cylinder (54a, 54b) fixedly mounted on a table (14) of a main body (12), said cylinder (54a, 54b) including a piston rod (56a, 56b) functioning as said pressing shaft.

15. A seam welding apparatus according to claim 12, wherein said bracket (42) is connected to piston rods (56a, 56b) of a pair of cylinders (54a, 54b), said bracket (42) being vertically movable when said cylinders (54a, 54b) are actuated.

16. A seam welding apparatus according to claim 11, wherein said turning mechanism (26, 26a) comprises a support plate (58) supporting a main body (12) which includes said pair of upper and lower electrode rolls (16a, 16b), a support post (24) rotatably supporting said support plate (58), and a turning assembly (62) for horizontally turning said main body (12) which includes said pair of upper and lower electrode rolls (16a, 16b) in unison with said support plate (58) by a predetermined angle about said support post (24).

17. A seam welding apparatus according to claim 16, wherein said sandwiched region where said workpiece (20) is sandwiched by said pair of upper and lower electrode rolls (16a, 16b) is vertically aligned with said support post (24) on said support plate (58).

18. A seam welding apparatus according to claim 16, wherein said turning assembly (62) comprises a rack (72) and a pinion (70), and a servomotor (66) including a drive shaft on which said pinion (70) is mounted.

19. A seam welding apparatus according to claim 16, wherein said turning assembly (62) is disposed on an edge of said support plate (58).
